(19) Europäisches Patentamt / European Patent Office / Office européen des brevets

(11) **EP 3 965 361 B1**

(12) **FASCICULE DE BREVET EUROPEEN**

(45) Date de publication et mention
de la délivrance du brevet:
**29.05.2024 Bulletin 2024/22**

(21) Numéro de dépôt: **21193745.3**

(22) Date de dépôt: **30.08.2021**

(51) Classification Internationale des Brevets (IPC):
**H04L 9/32** *(2006.01)*

(52) Classification Coopérative des Brevets (CPC):
**H04L 9/3218; H04L 9/3226; H04L 9/3234;
H04L 9/3236**

(54) **ECHANGE DE DONNÉES ENTRE UN CLIENT ET UN DISPOSITIF DISTANT, PAR EXEMPLE UN MODULE SÉCURISÉ**

DATENAUSTAUSCH ZWISCHEN EINEM CLIENT UND EINEM FERNEN GERÄT, Z.B. EIN GESCHÜTZTEN MODUL

DATA EXCHANGE BETWEEN A CLIENT AND A REMOTE DEVICE, FOR EXAMPLE A SECURE MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.09.2020 FR 2008919**

(43) Date de publication de la demande:
**09.03.2022 Bulletin 2022/10**

(73) Titulaire: **Idemia Identity & Security France
92400 Courbevoie (FR)**

(72) Inventeur: **CHABANNE, Hervé
92400 COURBEVOIE (FR)**

(74) Mandataire: **Idemia
2, place Samuel de Champlain
92400 Courbevoie (FR)**

(56) Documents cités:
**EP-A1- 3 010 177      US-A1- 2012 284 787
US-A1- 2016 050 198**

Processed by Luminess, 75001 PARIS (FR)

## Description

### DOMAINE DE L'INVENTION

La présente invention s'inscrit dans le domaine de l'échange sécurisé de données électroniques entre un client et un serveur sécurisé, par exemple pour la signature sécurisée d'un document électronique ou d'une transaction. Par « signature sécurisée » on entend une signature propre à prouver l'intégrité et l'authenticité du message reçu. L'invention se rapporte plus spécifiquement à un procédé amélioré de transmission de données cryptographiques entre un dispositif client et un serveur, à partir d'un message à signer détenu par le dispositif client. L'invention concerne également un dispositif client configuré pour exécuter le procédé, un système de transmission de données comprenant un tel dispositif client, un produit programme d'ordinateur permettant la mise en oeuvre du procédé de transmission de données, et des moyens de stockage lisibles par une unité de traitement qui permettent de mettre en oeuvre le procédé de transmission de données.

### ETAT DE LA TECHNIQUE

Il est connu de l'état de la technique, tel que par exemple la demande de brevet européen EP3010177, d'appliquer une signature numérique à des données à transférer via un réseau de communication, par exemple via Internet. Les données constituent un message électronique. La signature numérique permet de garantir que les données transférées n'ont pas été altérées (intégrité) et proviennent bien de la personne requise (identification). Dans toute la suite, pour abréger, le terme « signature » renvoie à une signature numérique.

Une méthode connue de signature sécurisée repose sur la cryptographie asymétrique. Un dispositif émetteur, par exemple un ordinateur ou un téléphone, dispose d'un message et dispose en outre d'une clé personnelle de signature, et le destinataire dispose d'une clé de déchiffrement. Le dispositif émetteur applique d'abord au message une fonction de hachage, puis signe le résultat de ce hachage avec sa clé personnelle de signature.

La clé personnelle de l'émetteur signataire est une clé privée. Il est crucial, pour la fiabilité de la signature, d'empêcher que cette clé privée ne soit obtenue frauduleusement par un tiers, par exemple par interception des échanges avec le destinataire.

A ce titre, il a été proposé de conserver la clé privée de signature dans un environnement dédié, à haut niveau de sécurité, plutôt que dans une mémoire du dispositif émetteur qui pourrait faire l'objet de failles de sécurité. La gestion des clés de signature peut par exemple être confiée à des modules de sécurité matérielle, dits HSM pour « Hardware Security Modules ».

Un HSM stocke et protège des clés cryptographiques (notamment la clé privée de signature ici) dans un environnement hautement sécurisé. Toutes les communications de données entre le HSM et des dispositifs externes sont cryptées à l'aide de clés de chiffrement propres au HSM, et répondent à des standards de sécurité stricts. Des solutions matérielles de sécurisation peuvent en outre être mises en oeuvre pour empêcher matériellement la fuite de données. On notera que des environnements sécurisés sont aussi réalisables de manière uniquement logicielle et sans module matériel, par exemple via un service de « cloud computing » sécurisé.

Ainsi, le titulaire d'un dispositif client souhaitant signer un message sollicite une authentification auprès du HSM, en prouvant par exemple sa connaissance d'un mot de passe. Le HSM ne reconnaît qu'un nombre limité de dispositifs clients, préalablement enrôlés auprès de lui et qui disposent chacun de données personnelles d'authentification.

Les solutions actuelles de signature numérique à distance, fondées sur un transfert de données entre des clients souvent non sécurisés et des modules de sécurité matérielle HSM, présentent toutefois des inconvénients.

En cas de compromission du dispositif client, notamment par un attaquant malveillant, ou en cas d'interception des échanges entre client et HSM, les données d'authentification du client peuvent être volées. L'attaquant est ainsi susceptible de se faire passer pour le titulaire du dispositif client en utilisant des données transmises lors de la signature d'un précédent message, et de signer frauduleusement de nouveaux messages en son nom. On parle alors d'attaques « par rejeu ». Par exemple, si la signature est déclenchée à distance après la saisie d'un mot de passe, il peut être difficile de dissimuler le mot de passe de manière sûre au sein des données échangées, notamment quand le dispositif client est un simple terminal mobile non sécurisé.

Plus généralement, des attaques par rejeu sont possible dans un contexte autre que celui d'une signature de message : un attaquant malveillant peut par exemple chercher à s'authentifier comme un dispositif client autorisé auprès du serveur sécurisé.

Pour limiter le risque d'attaques par rejeu auprès du serveur sécurisé détenant la ou les clés de signature, une solution de l'état de la technique consiste à modifier le schéma de signature en utilisant un cryptosystème à seuil. Les données de signature du client comprennent alors un secret réparti entre plusieurs serveurs sécurisés signataires, et la coopération de plusieurs serveurs signataires est nécessaire pour apposer la signature.

Toutefois, l'utilisation d'un secret réparti pour sécuriser une signature de message est peu pratique, car plusieurs autorités de certification sont nécessaires et un volume plus important de transmissions de données est nécessaire.

## DESCRIPTION GENERALE DE L'INVENTION

Il existe donc un besoin pour un procédé amélioré de transfert de données cryptographiques entre un dispositif client non nécessairement sécurisé et un serveur sécurisé, ce dernier étant par exemple un module inviolable sécurisé.

Le procédé recherché doit notamment limiter le risque d'attaques par rejeu, au cours desquelles un attaquant malveillant clone l'identité d'un dispositif client autorisé auprès du serveur sécurisé.

On cherche en particulier à sécuriser les signatures numériques de message auprès d'un serveur distant tel qu'un module HSM inviolable. Il existe ainsi un besoin pour un procédé de transfert de données qui permette à un utilisateur d'un dispositif client, muni d'un élément secret confidentiel, de déclencher une signature de message par le serveur sécurisé en prouvant sa connaissance de l'élément secret confidentiel, sans risquer de divulguer l'élément secret.

Le procédé recherché de transfert de données ne doit pas nécessiter une puissance de calcul très importante au niveau du dispositif client, pour permettre sa mise en oeuvre par un terminal mobile standard. Il ne doit pas nécessiter un grand nombre de calculs supplémentaires, par rapport aux procédés standard d'authentification auprès d'un HSM.

Pour répondre à ces besoins, l'invention concerne, selon un premier aspect, un procédé de transmission de données cryptographiques entre un dispositif client et un serveur à partir d'un message détenu par le dispositif client,

le dispositif client détenant un élément secret et un jeton d'authentification préalablement généré lors d'un enrôlement auprès du serveur,
le procédé de transmission comprenant des étapes exécutées par le dispositif client de : calcul d'un nonce, le nonce étant fonction du message et étant fonction d'une
information de sécurité non aléatoire connue du dispositif client, et transmission au serveur d'une donnée dépendant du nonce calculé,
transmission au serveur d'une donnée dépendant du jeton d'authentification, génération d'une preuve de connaissance de secret à partir de l'élément secret et en fonction du nonce, la preuve de connaissance de secret étant construite de sorte à prouver la connaissance de l'élément secret sans divulguer l'élément secret, et transmission au serveur de ladite preuve de connaissance,
de sorte que le serveur puisse vérifier la validité de la preuve de connaissance de secret, vérifier la possession du jeton d'authentification et décrypter le message.

La transmission de données cryptographiques de l'invention comprend ainsi un échange de données relatives à un message et comprend en outre un échange de données d'authentification du client. Le serveur peut non seulement vérifier que les données reçues émanent d'un titulaire d'un dispositif client possédant un jeton d'authentification, mais peut également vérifier que ce titulaire connaît l'élément secret.

La preuve de connaissance de secret ne divulgue pas l'élément secret, ce qui limite le risque d'attaques par rejeu.

En outre, le message est transmis sous forme dissimulée au serveur, accompagné d'informations de sécurité permettant d'une part d'assurer le non-rejeu (par exemple le non-rejeu d'une signature de message), et d'autre part de protéger le dispositif client contre un clonage de son identité. Le serveur peut vérifier ultérieurement, lors du décryptage du message, qu'il est plausible que la demande émane bien du dispositif client possédant le jeton d'authentification. On limite ainsi encore davantage le risque d'attaques par rejeu auprès du serveur.

Le procédé de l'invention est notamment utilisable de manière très avantageuse pour déclencher une signature du message, par le serveur qui détient alors une clé de signature.

De manière préférée, l'élément secret confidentiel n'est pas transmis au serveur. Grâce à la preuve de connaissance de secret, le serveur est capable de valider la connaissance de l'élément secret par le dispositif client, sans disposer directement de l'élément secret.

De manière optionnelle et non limitative, le procédé de transmission de données tel que défini ci-avant peut comprendre en outre les caractéristiques techniques suivantes, prises seules ou en l'une quelconque des combinaisons possibles :

- l'information de sécurité comprend une donnée d'historique représentative de précédentes transmissions de données cryptographiques entre le dispositif client et le serveur, de préférence un compteur incrémenté par le dispositif client lors de chaque itération de transmission de données cryptographiques au serveur, et/ou au moins un haché d'un précédent message transmis par le dispositif client.

- l'information de sécurité comprend une donnée de contexte d'émission du message,

- la donnée de contexte d'émission du message comprend une date d'émission et/ou une heure d'émission et/ou une donnée de localisation.

- le serveur détient en outre des données antérieures de contexte d'émission, correspondant à une communication antérieure avec le dispositif client, et le serveur met en oeuvre une corrélation des données de contexte d'émission du message avec les données antérieures de contexte d'émission afin d'établir éventuellement une incohérence.

- l'information de sécurité comprend une donnée de preuve d'identité du dispositif client, de préférence un identifiant du dispositif client.

- le calcul du nonce comprend la concaténation du message et de l'information de sécurité, ou la concaténation d'un haché du message et de l'information de sécurité.

- le dispositif client détient une clé de chiffrement de nonce, et le serveur détient une clé de déchiffrement de nonce correspondant à la clé de chiffrement de nonce, la donnée dépendant du nonce transmise lors de la transmission comprenant un chiffré du nonce, obtenu en fonction de la clé de chiffrement de nonce.

- la preuve de connaissance de secret dépend de la donnée dépendant du jeton d'authentification.

- la génération de la preuve de connaissance de secret comprend des sous-étapes de :

  calcul d'une donnée intermédiaire d'authentification en fonction du nonce et en fonction de la donnée dépendant du jeton d'authentification, et/ou signature de la donnée intermédiaire d'authentification pour prouver la connaissance de l'élément secret, résultant en la preuve de connaissance de secret.

- la preuve de connaissance de secret, notée s, est calculée par le dispositif client selon la formule suivante :

$$s = r + c*a*h' \bmod p,$$

où :

  c est la donnée intermédiaire d'authentification ;
  r est un premier nombre entier aléatoire, et a est un deuxième nombre entier aléatoire ;
  p est un nombre premier ;
  h' est un haché de l'élément secret.

- la preuve de connaissance de secret est masquée à l'aide d'une première donnée de masque aléatoire non publique et connue uniquement du dispositif client.

- la donnée dépendant du jeton d'authentification comprend un jeton masqué, le jeton masqué dépendant d'au moins une deuxième donnée de masque aléatoire non publique et connue uniquement du dispositif client.

- la clé de chiffrement de nonce est une clé publique,

et la clé de déchiffrement de nonce est une clé privée, lesdites clés étant de préférence obtenues conformément à l'algorithme RSA.

- le procédé comprend des étapes additionnelles exécutées par le serveur de :

  obtention du nonce, de sorte que le serveur obtient des données de message à signer, et vérification de validité de la preuve de connaissance de secret et de validité de la donnée dépendant du jeton d'authentification.

- l'obtention du nonce par le serveur comprend un déchiffrement d'un chiffré du nonce, à l'aide d'une clé de déchiffrement de nonce.

- le serveur détient un compteur supplémentaire, et le déchiffrement comprend une vérification par le serveur qu'un compteur obtenu à partir du nonce est supérieur ou égal au compteur supplémentaire.

- la preuve de connaissance de secret est déterminée valide par le serveur, et le procédé comprend des étapes additionnelles exécutées par le serveur de :

  signature du message, résultant en un message signé, et transmission du message signé à un dispositif destinataire.

- l'étape de signature comprend le calcul par le serveur d'une signature de type Digital Signature Algorithm, dite signature DSA.

L'invention concerne, selon un deuxième aspect, un dispositif électronique client comprenant une interface de communication avec un serveur informatique, le dispositif client étant configuré pour mettre en oeuvre un procédé de transmission tel que défini ci-avant.
De manière optionnelle et non-limitative, le dispositif client comprend un ordinateur et/ou un téléphone.
L'invention concerne, selon un troisième aspect, un système de transmission de données cryptographiques, comprenant un dispositif client tel que défini ci-avant et comprenant en outre le serveur informatique.
De manière optionnelle et non-limitative, le serveur est associé à un module matériel inviolable disposant d'un environnement sécurisé, de préférence une carte électronique sécurisée, ou un boîtier électronique sécurisé, ou une machine serveur sécurisée.
L'invention concerne, selon un quatrième aspect, un produit programme d'ordinateur comprenant des instructions de code qui, lorsque lesdites instructions de code sont exécutées par une unité de traitement, conduisent l'unité de traitement à mettre en oeuvre un procédé de transmission tel que défini ci-avant.
L'invention concerne, selon un cinquième aspect, des moyens de stockage lisibles par une unité de traitement, les moyens de stockage comprenant des instructions de code conduisant ladite unité de traitement à mettre en oeuvre un procédé de transmission tel que défini ci-avant.

## DESCRIPTION GENERALE DES FIGURES

D'autres caractéristiques, buts et avantages de l'invention ressortiront de la description qui suit, qui est purement illustrative et non limitative, et qui doit être lue en regard des dessins annexés parmi lesquels :

[Fig. 1] La **Figure 1** est un schéma représentatif d'un système de transmission de données cryptographiques selon un exemple de réalisation.

[Fig. 2] La **Figure 2** représente des étapes d'un procédé d'enrôlement d'un dispositif client auprès d'une autorité de certification, préalablement à un procédé de transmission sécurisée de données cryptographiques.

[Fig. 3] La **Figure 3** représente des étapes mises en oeuvre entre un dispositif client et un serveur, au cours d'un procédé de transmission de données cryptographiques selon un mode de réalisation de l'invention, subséquemment à un enrôlement selon la Figure 2.

[Fig. 4] La **Figure 4** illustre un exemple de transmission par le dispositif client d'une preuve de connaissance de secret et d'un jeton d'authentification masqué, au cours d'une transmission de données cryptographiques selon la Figure 3.

[Fig. 5] La **Figure 5** illustre un exemple de vérification par le serveur d'une preuve de connaissance de secret et d'un jeton d'authentification, au cours d'une transmission de données cryptographiques selon la Figure 3.

## DESCRIPTION DETAILLEE D'UN MODE DE REALISATION DE L'INVENTION

Dans toute la description ci-après, un dispositif client dispose d'un ou plusieurs message(s) à signer, et souhaite déclencher la signature numérique du message par un élément sécurisé distant, comme par exemple un module matériel inviolable de type HSM.

On comprendra que le terme « message » définit ici tout ensemble de données informatiques transmis par un émetteur (correspondant ici au dispositif client) *via* un réseau de communication. Ce terme n'est pas limité à un ensemble de données de texte ou d'images qui seraient prévues pour un unique destinataire. Le message peut comprendre des fichiers informatiques et/ou des images (par exemple de document(s) d'identité) et/ou des données de texte lisibles par un humain et/ou des données de transaction.

On notera que la transmission d'un nonce calculé en fonction d'informations de sécurité telles que décrites ci-après, depuis le dispositif client vers le serveur, pourrait être envisagée distinctement de toute signature de message. Les informations de sécurité pourraient par exemple servir à sécuriser une authentification du client auprès du serveur.

Sur l'ensemble des figures annexées et tout au long de la description ci-après, les éléments similaires portent des références alphanumériques identiques.

### Système de signature sécurisée de message

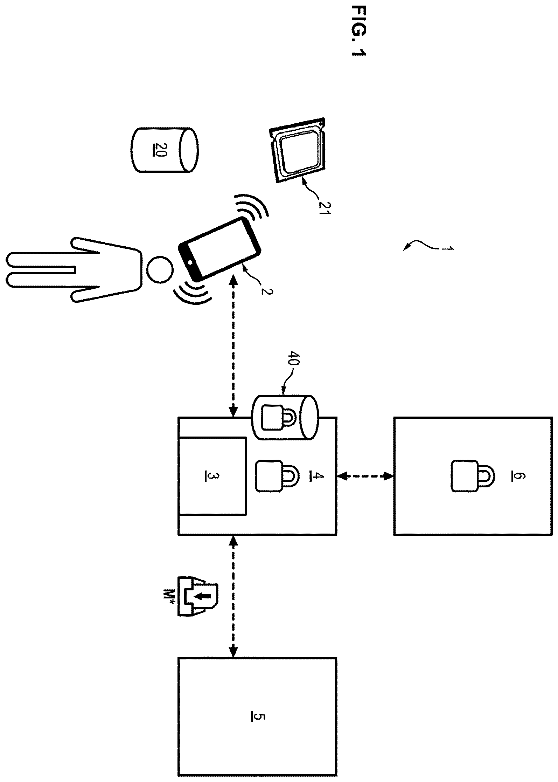

La **Figure 1** illustre de manière schématique un système 1 de transmission de données cryptographiques selon un exemple de réalisation.

Le système 1 peut être utilisé pour procéder à un enrôlement d'un dispositif client 2, auprès d'un fournisseur de services sécurisés comprenant une autorité 6 de certification et au moins un module matériel 4 inviolable. Le système peut comprendre plusieurs modules matériels, par exemple semblables au module matériel 4.

Après enrôlement, le système 1 peut en outre être utilisé pour procéder à une authentification du dispositif client 2, puis à une signature numérique sécurisée d'un message M provenant d'un utilisateur du dispositif client 2. Le message M à signer est par exemple prévu pour une consultation par un utilisateur du serveur destinataire 5, et/ou simplement prévu pour être stocké sous forme d'un message signé M* sur une base de données (non illustrée) du serveur destinataire 5.

Le dispositif client 2 est un dispositif électronique, non nécessairement doté d'un environnement à haut niveau de sécurité. En effet, le dispositif client 2 est de préférence un appareil électronique non sécurisé, utilisé au quotidien dans un cadre personnel ou professionnel. Le dispositif client 2 est par exemple un ordinateur ou un téléphone. Le dispositif client 2 ne dispose pas nécessairement d'une puissance de calcul élevée. Il peut s'agir de plusieurs dispositifs clients interconnectés, par exemple des dispositifs clients d'un groupe d'utilisateurs ayant souscrit à un service de signature numérique.

Dans le présent exemple, le dispositif client 2 comprend une mémoire 20 non volatile. La mémoire 20 est par exemple de type disque dur, SSD, EEPROM, etc. Le dispositif client 2 comprend également une mémoire volatile. Des instructions de code pour la mise en oeuvre d'une transmission de données de message et d'une authentification peuvent être chargées dans la mémoire 20. Le dispositif client 2 comprend en outre une unité de traitement 21, comprenant typiquement un ou plusieurs processeur(s) dotés de moyens de calcul. Si le dispositif client 2 est un téléphone mobile, l'unité de traitement 21 peut être par exemple intégrée à une puce mobile SoC classique.

Le dispositif client 2 peut avantageusement comprendre en outre une interface utilisateur permettant la saisie et la lecture de données. Par exemple, le dispositif client 2 comprend un écran tactile et/ou un écran non tactile et/ou un clavier, pour la saisie d'un code PIN, la saisie et/ou la visualisation d'un message à signer, etc.

A l'inverse du dispositif client 2, le module matériel 4 inviolable appartient à un environnement hautement sécurisé. Le module matériel 4 est par exemple un module HSM, pour « Hardware Security Module ».

De manière connue, un module HSM est un dispositif informatique utilisé pour stocker et gérer de manière sécurisée des données sensibles, notamment des clés cryptographiques. Le module HSM dispose par exemple de ses propres clés cryptographiques de chiffrement et de déchiffrement.

Pour renforcer la sécurité du module matériel 4 et des échanges entre le module matériel 4 et l'extérieur, des solutions de sécurisation matérielle sont de préférence implémentées sur le module matériel 4. Par exemple, des actions d'urgence peuvent être programmées en cas de détection d'une tentative d'altération ou de lecture non autorisée des données enregistrées dans le module matériel 4. Les actions d'urgence peuvent inclure une ou plusieurs actions parmi : un effacement des clés cryptographiques enregistrées dans le module matériel, un effacement de toute la mémoire du module matériel, l'émission d'une alerte à destination des utilisateurs du module matériel, une rupture d'alimentation électrique, etc. A titre d'exemple, l'alimentation électrique du HSM est coupée aussitôt qu'une violation de sécurité est détectée, empêchant instantanément toute fuite de données.

Le module matériel 4 inviolable est typiquement certifié selon des normes et standards internationaux, garantissant la sécurisation et la confidentialité des données enregistrées dans le module matériel 4 (alors que le dispositif client 2 n'est pas nécessairement certifié d'une telle manière).

Dans le cas présent, le module matériel 4 inviolable stocke, au sein de la mémoire sécurisée 40, une ou plusieurs clé(s) cryptographique(s) de signature numérique Sigk. La ou les clé(s) de signature numérique sont stockées avec un haut niveau de sécurité dans la mémoire 40 du module matériel 4, au lieu d'être stockées directement dans le dispositif client 2, ce dernier étant susceptible de faire l'objet d'une violation de sécurité.

Le module matériel 4 inviolable est associé à un serveur 3 informatique, comprenant une interface de communication avec le dispositif client 2. Il comprend en outre une mémoire dans laquelle sont chargées des instructions de code pour la mise en oeuvre d'une authentification et d'une signature de message. Dans l'exemple de la Figure 1, le module matériel 4 inviolable comprend une machine serveur, à laquelle est intégré le serveur 3.

En alternative, le serveur 3 peut se trouver à l'extérieur du module matériel 4, par exemple dans des cas où le module matériel 4 est une carte électronique sécurisée, ou un boîtier sécurisé connecté à un ordinateur gérant le serveur 3.

De façon alternative, le module matériel 4 peut être du type carte électronique sécurisée, par exemple une carte enfichable dans un ordinateur, ou bien du type boîtier électronique, par exemple connecté à un ordinateur via une liaison filaire. Le module matériel 4 peut comprendre une puce électronique (puce micro-SD, SIM, EMV, et.) formant un élément sécurisé, la sécurisation de l'élément sécurisé étant réalisée à l'aide de fonctions cryptographiques. Si le module matériel 4 comprend par exemple un ou plusieurs processeurs ou une ou plusieurs mémoires en-dehors de l'élément sécurisé, tout échange de données entre le(s)dit(s) processeur(s) et/ou mémoire(s) et l'élément sécurisé est chiffré à l'aide des fonctions cryptographiques propres au module matériel 4. En alternative, le module inviolable possédant la ou les clé(s) de signature pourrait être réalisé de manière logicielle, éventuellement sans module matériel, par exemple via un service de « cloud computing » sécurisé. On peut alors parler de SSM, pour « Software Security Module ».

Dans le présent exemple, le module matériel 4 est fonctionnellement couplé à un serveur d'une autorité 6 de certification, qui est configuré pour délivrer des clés cryptographiques. Comme il sera vu ci-après, l'autorité 6 de certification intervient typiquement pendant l'enrôlement des dispositifs clients, pour générer et transmettre de nouveaux jetons d'authentification aux différents dispositifs clients. On comprendra que l'autorité 6 de certification peut être distribuée sur plusieurs serveurs sécurisés.

Le destinataire 5 correspond à un serveur non nécessairement sécurisé. Le destinataire 5 est par exemple intégré à un appareil électronique personnel ou professionnel du même type que le dispositif client 2. On comprendra que le destinataire 5 peut être distribué sur plusieurs appareils.

Le dispositif client 2 dispose d'une interface de communication avec le serveur 3. Le serveur 3 dispose d'une interface de communication avec le dispositif client 2, et avec le destinataire 5 (ainsi qu'avec le module matériel 4, si le serveur 3 n'est pas intégré au module matériel 4). Les communications sont par exemple réalisées sur un réseau local, via des liaisons filaires, sur un réseau Internet, 4G, 5G, etc.

Dans toute la suite, on considère que le dispositif client 2 s'enrôle auprès de l'autorité 6, et s'authentifie ultérieurement auprès du serveur 3. D'autres configurations sont possibles : le serveur 3 peut réaliser de façon autonome l'enrôlement et l'authentification, l'autorité 6 de certification peut participer à l'authentification, etc.

*Enrôlement préalable du dispositif client*

Pour prouver son identité au serveur 3 du module matériel 4 et déclencher une signature de message, le dispositif client 2 doit décliner une preuve de son identité lors de l'authentification, en fournissant des données prouvant la connaissance d'un élément secret PIN qui lui est propre.

Dans le présent exemple et dans toute la suite, l'élément secret PIN est une chaîne de caractères formant un code PIN. L'élément secret PIN est par exemple sélectionné par l'utilisateur du dispositif client et saisi sur un clavier en amont de l'étape 1100, ou encore généré aléatoirement et porté à la connaissance de l'utilisateur en amont de l'étape 1100. On notera qu'un élément secret peut être généré sous toute autre forme appropriée, par exemple une clé, une donnée biométrique de l'utilisateur, une clé dérivée d'une telle donnée biométrique, un identifiant d'utilisateur, un identifiant du dispositif client, etc.

Dans le présent exemple, le dispositif client 2 doit s'enrôler auprès d'un serveur d'enrôlement, ici l'autorité 6, pour obtenir et stocker un jeton d'authentification, de préférence généré à partir de l'élément secret PIN. Le même jeton d'authentification sera utilisable par le client lors d'une authentification ultérieure, pour prouver son identité.

Dans le présent exemple, le jeton d'authentification se présente sous la forme (B, C) où B est une première donnée de jeton et C est une deuxième donnée de jeton.

De préférence, la première donnée de jeton B est issue de l'application d'une fonction de chiffrement Enc à des données associées à l'utilisateur et indépendantes de son élément secret PIN, ainsi qu'à une première clé de jeton pk1, comme il sera vu ci-après.

De préférence, la deuxième donnée de jeton C est issue de l'application de la fonction de chiffrement Enc à des données associées à l'utilisateur et à son élément secret PIN, et à une deuxième clé de jeton pk2.

Par exemple, les clés de jeton pk1 et pk2 sont générées par l'autorité 6 selon des principes de cryptographie asymétrique. La première clé publique de jeton pk1 est alors associée à une première clé privée de jeton sk1 qui demeure secrète, et la deuxième clé publique de jeton pk2 est alors associée à une deuxième clé privée de jeton sk2 qui demeure également secrète.

La fonction de chiffrement Enc est par exemple une fonction de chiffrement pseudo-homomorphique.

Comme il est connu de l'Homme du Métier, une fonction pseudo-homomorphique f est une fonction compatible avec le masquage telle que, pour une opération de masquage M comme la multiplication par une donnée de masque a, il existe une opération O, comme l'exponentiation par a, telle que $O(f(x)) = f(M(x))$, c'est-à-dire $(f(x))^a = f(x*a)$. Une telle fonction peut également être homomorphique entre deux opérations Op1 et Op2, si effectuer l'opération $Op2(f(x), f(y))$ permet d'obtenir la valeur $f(x \text{ Op1 } y)$.

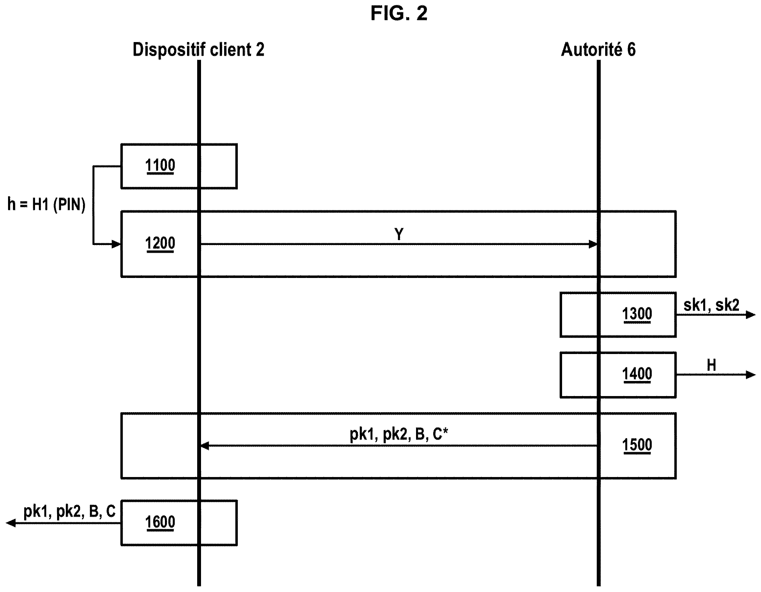

On a représenté sur la Figure 2 des étapes successives d'un procédé d'enrôlement du dispositif client 2 auprès de l'autorité 6, selon un exemple de réalisation. Le procédé d'enrôlement peut ainsi être mis en oeuvre par le système 1 illustré sur la Figure 1. On comprendra que le dispositif client 2 est le même que celui qui sera ensuite impliqué dans le procédé d'authentification (faute de quoi l'authentification ne doit pas être validée).

Dans le présent exemple, le jeton d'authentification (B, C) est généré à l'aide d'un algorithme de type El-Gamal.

Ledit algorithme utilise les paramètres suivants :

- Un paramètre de sécurité λ, entier non nul ;

- Une courbe elliptique (p, G, g), avec p un nombre premier et G un générateur d'un groupe multiplicatif d'ordre p, mis en oeuvre dans un corps fini premier.

A une étape 1100, l'élément secret PIN est sélectionné au niveau du dispositif client 2. De manière très avantageuse, l'élément secret PIN est ensuite haché au cours de l'étape 1100 par le dispositif client. Par exemple, un haché $h = H1(PIN)$ est calculé, avec H1 une fonction de hachage.

Dans le présent exemple, le haché h n'est pas transmis tel quel à l'autorité 6, mais est masqué. Ainsi, une étape 1200 de masquage est mise en oeuvre par le dispositif client 2. La donnée masquée Y est calculée selon la formule $Y=[a.h]G$, a étant une donnée de masque connue uniquement du dispositif client 2. Le paramètre G ainsi que le corps fini où le groupe est mis en oeuvre correspondent aux paramètres de l'algorithme d'El-Gamal défini ci-avant, ces paramètres étant partagés entre le dispositif client 2 et l'autorité 6. La donnée masquée Y est transmise à l'autorité 6, de préférence sur un canal sécurisé.

A partir de la donnée masquée Y, l'autorité 6 peut ensuite générer le jeton d'authentification (B, C) et le communiquer au dispositif client 2 de façon sécurisée, au cours d'étapes 1300 à 1500.

De préférence, le jeton d'authentification (B, C) dépend de la donnée masquée Y, et dépend en outre d'une clé secrète utilisateur k connue seulement de l'autorité 6.

Dans le présent exemple, la clé secrète utilisateur k est calculée au cours de l'étape 1300, et dépend d'un secret maître mk connu par l'autorité 6 et qui régit la génération de jetons d'authentification par l'autorité 6. La clé secrète utilisateur k dépend ici en outre d'une information inf relative à l'identité du dispositif client 2, selon la formule suivante : $k = H4(mk,inf)$. H4 est une fonction de hachage.

A l'étape 1300, l'autorité 6 génère en outre les clés nécessaires pour appliquer ensuite les fonctions de chiffrement et générer le jeton d'authentification destiné au client.

La première clé publique de jeton pk1 est associée à une première clé privée de jeton sk1, et la deuxième clé publique de jeton pk2 est alors associée à une deuxième clé privée de jeton sk2.

Pour la génération des clés publiques de jeton et des clés privées de jeton, l'autorité 6 utilise par exemple les paramètres El-Gamal tels que définis ci-avant, c'est-à-dire le nombre premier p, le paramètre de sécurité $\lambda$, et le groupe engendré par G.

La première clé privée de jeton sk1 et la deuxième clé privée de jeton sk2 sont conservées en mémoire, avec un haut niveau de sécurité. Si l'enrôlement n'est pas mis en oeuvre directement par le module matériel 4 inviolable, la première clé privée de jeton sk1 et la deuxième clé privée de jeton sk2 sont communiquées au module matériel 4.

Ensuite, à une étape 1400, la première donnée de jeton B et une deuxième donnée intermédiaire de jeton C*, ainsi qu'une donnée à mémoriser H, sont calculées comme suit :

- La première donnée de jeton B est égale à Enc(pk1, [k]G), et dépend donc de la clé secrète utilisateur k;

- La deuxième donnée intermédiaire de jeton C* est égale à Enc(pk2,[k]Y), et dépend donc de la donnée masquée Y issue du secret;

- La donnée à mémoriser H est calculée à partir de la clé secrète utilisateur k et du générateur G, par exemple selon la formule suivante : H = H5([k]G). H5 est une fonction de hachage. La donnée à mémoriser H, qui est utile pour l'authentification, est transmise le cas échéant de façon sécurisée au serveur 3.

Ainsi, de manière avantageuse, la première donnée de jeton B et la deuxième donnée intermédiaire de jeton C* sont issues de clés publiques différentes, à savoir ici la première clé publique de jeton pk1 et la deuxième clé publique de jeton pk2 obtenues à l'étape 1300.

Il n'est pas nécessaire que la première donnée de jeton B et la deuxième donnée intermédiaire de jeton C* soient conservées en mémoire par l'autorité 6.

Au cours d'une étape 1500, l'autorité 6 transmet au dispositif client 2 les données nécessaires à l'authentification subséquente. Ici, l'autorité 6 transmet au dispositif client 2 la première clé publique de jeton pk1, la deuxième clé publique de jeton pk2, la première donnée de jeton B, et la deuxième donnée intermédiaire de jeton C*.

Enfin, à une étape 1600, pour obtenir le jeton d'authentification (B, C), le dispositif client 2 procède à un démasquage de la deuxième donnée intermédiaire de jeton C*. Pour ce faire, le dispositif client 2 récupère la donnée de masque $\alpha$ utilisée à l'étape 1200 précédente, et met en oeuvre une fonction cryptographique SMul. Ici, la fonction cryptographique SMul est par exemple une fonction multiplication par un scalaire.

Par exemple, la deuxième donnée de jeton C est obtenue à partir de la deuxième donnée intermédiaire de jeton C* selon la formule : C = SMul(pk2,C*,([1/$\alpha$] mod p)).

Enfin, le client stocke le jeton d'authentification (B, C) ainsi reconstitué et les clés publiques de jeton pk1 et pk2. La donnée de masque $\alpha$ est préférablement effacée de la mémoire du dispositif client, au terme de l'enrôlement.

Au cours de l'enrôlement selon l'exemple décrit ci-avant, de préférence ni le serveur 3 ni l'autorité 6 n'ont accès directement à la valeur de l'élément secret PIN, ou à la valeur du haché h dudit secret. Un avantage est que l'élément secret PIN demeure non accessible, même en cas de compromission du serveur 3 ou de la mémoire de l'autorité 6 par un attaquant tiers.

En alternative, la première donnée de jeton B et la deuxième donnée de jeton C pourraient être calculées directement par l'autorité 6 et transmises au dispositif client 2. De manière encore alternative, une seule donnée sécurisée pourrait constituer le jeton d'authentification du dispositif client 2.

On pourra se référer aux différents exemples de procédés de génération de jeton d'authentification décrits dans la demande de brevet européen EP 3 010 177 A1.

De manière alternative au procédé d'enrôlement illustré sur la Figure 2, le jeton d'authentification pourrait être généré par le dispositif client 2 en autonomie. Cela serait toutefois moins avantageux : le dispositif client 2 devrait alors être doté d'une puissance de calcul importante, et intégrer des fonctions cryptographiques nécessaires à la génération de clés. Des appareils électroniques d'usage quotidien, tels que des ordinateurs ou des téléphones utilisés par le public, ne répondent pas nécessairement à ces conditions.

*Authentification du dispositif client, signature sécurisée de message*

Dans toute la suite, le dispositif client 2 dispose d'un message M à signer. Comme il a été indiqué ci-avant, la signature numérique apposée au message M doit garantir que les données du message M n'ont pas été altérées (intégrité) et proviennent bien de la personne requise, c'est-à-dire ici du dispositif client 2 qui s'est précédemment enrôlé (identification). Le dispositif client 2 ne dispose pas de la ou des clé(s) nécessaires à la signature numérique, par exemple préalablement délivrée(s) par l'autorité 6.

Le dispositif client 2 sollicite donc le module matériel 4 dans le but d'apposer la signature numérique sur le message M et d'obtenir un message signé M*. Le dispositif client 2 doit prouver la connaissance de l'élément secret PIN avant la signature.

Dans le présent exemple, la signature numérique est à réaliser à l'aide d'une clé de signature Sigk connue seulement du module matériel 4, résultant en un message signé M*.

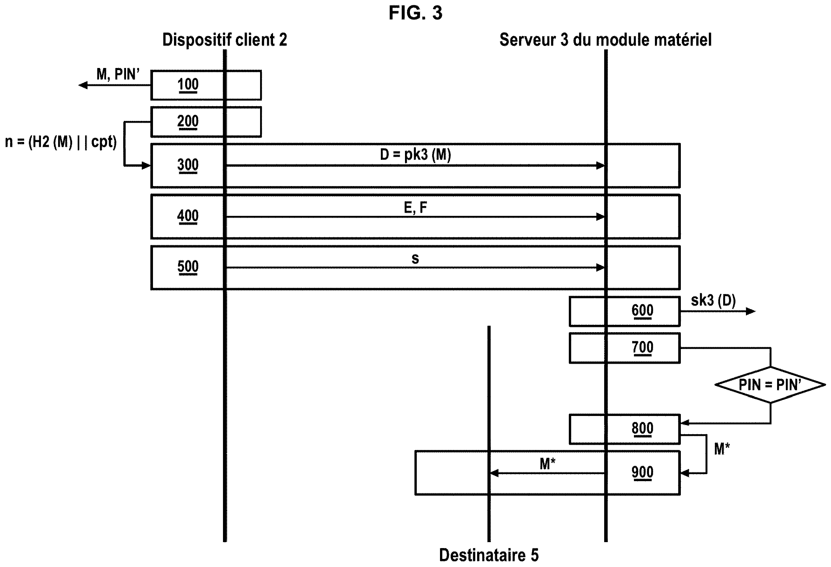

On a représenté sur la **Figure 3** des étapes successives d'un procédé de transmission de données cryptographiques selon un exemple de réalisation, entre le dispositif client 2 et le serveur 3 associé au module matériel 4 inviolable. Le procédé de transmission de données peut être mis en oeuvre par le système 1 illustré sur la Figure 1. La transmission de données fait suite à un enrôlement du dispositif client 2, par exemple selon le procédé de la Figure 2. Le dispositif client 2 dispose d'un jeton d'authentification (B, C).

Le procédé de transmission de données comprend notamment une transmission par le dispositif client 2 de données correspondant au message M à signer, ainsi qu'une authentification du dispositif client 2 auprès du serveur 3.

Ici, à une première étape 100 optionnelle, le dispositif client 2 acquiert l'élément secret PIN'. On note « PIN' » ledit élément secret fourni lors de l'authentification, et le serveur 3 est amené à vérifier s'il s'agit de la même valeur que l'élément secret PIN utilisé lors de l'enrôlement (par exemple de la même chaîne de caractères).

Si la tentative d'authentification est non frauduleuse, le serveur 3 est amené à établir l'égalité PIN = PIN'.

Dans le présent exemple, l'élément secret PIN' est une chaîne de caractères. L'utilisateur est par exemple invité, par une notification sur l'écran du dispositif client 2, à saisir l'élément secret PIN' sur le dispositif client 2.

Pour éviter une rupture de confidentialité de l'élément secret PIN', ce secret ne sera pas transmis directement (pas même sous forme cryptée) au serveur 3. A la place, une preuve de connaissance de secret s sera générée au cours des étapes suivantes. Une donnée intermédiaire de secret h' = H1 (PIN') est ici générée, en vue de la génération ultérieure de la preuve de connaissance de secret s.

A l'issue de la saisie, la donnée intermédiaire de secret h' est stockée temporairement en mémoire, par exemple pendant la durée de la session en cours de requête de signature de message.

En alternative, le dispositif client 2 dispose déjà de l'élément secret PIN' au début de la transmission de données avec le serveur 3.

Ensuite, de retour à la Figure 3, les étapes suivantes sont mises en oeuvre :

- calcul 200 par le dispositif client 2 de donnés correspondant au message M à signer, comprenant un nonce m qui est fonction du message M et est fonction d'une information de sécurité non aléatoire connue du dispositif client 2 ;
- transmission 300 par le dispositif client 2 au serveur 3 d'un chiffré D du nonce m, obtenu à l'aide d'une clé de chiffrement pk3 dont dispose le dispositif client 2, la clé de chiffrement pk3 étant associée à une clé de déchiffrement sk3 dont dispose le serveur 3 ;
- transmission 400 par le dispositif client 2 au serveur 3 d'une donnée dépendant du jeton d'authentification (B, C) (par exemple d'un jeton masqué (E, F)) ;

- génération 500 par le dispositif client 2 d'une preuve de connaissance de secret s, à partir de l'élément secret PIN' et en fonction du nonce m, la preuve de connaissance de secret s étant construite de sorte à prouver la connaissance de l'élément secret PIN' sans divulguer ce secret, puis transmission de cette preuve de connaissance au serveur 3 ;
- vérification par le serveur 3, au cours d'étapes 600 et 700, de la validité de la preuve de connaissance de secret s et de la possession non frauduleuse du jeton d'authentification (B, C), et décryptage du message M à partir du chiffré D.

On note que la clé de déchiffrement sk3 est ici indépendante de la clé de signature Sigk accessible par le serveur 3. Une fonction de la clé de déchiffrement sk3 est de sécuriser l'échange des données relatives au message M.

De manière alternative, l'étape 100 d'acquisition de l'élément secret PIN' pourrait être mise en oeuvre en aval d'une ou plusieurs de ces étapes parmi les étapes 200 à 400.

Dans l'exemple de transmission de données cryptographiques décrit ci-avant, le serveur 3 n'a de préférence pas accès à la valeur de l'élément secret PIN', tout comme il n'a pas eu accès à l'élément secret PIN au cours de l'enrôlement. Ainsi, l'authentification du dispositif client 2 ne compromet pas la confidentialité de l'élément secret PIN.

En outre, le jeton d'authentification (B, C) ne risque pas non plus d'être compromis en cas d'attaques par rejeu visant le serveur, ou en cas d'interception des données transmises entre le client et le serveur, car la première donnée de jeton B et la deuxième donnée de jeton C ne sont pas transmises au serveur 3. La connaissance de la donnée transmise au cours du procédé de la Figure 3 et dépendant du jeton d'authentification (B, C) ne doit pas permettre à un attaquant de remonter au jeton d'authentification (B, C).

*- Transmission sécurisée d'un nonce dépendant du message*

On décrit dans la suite un exemple de mise en oeuvre des étapes 200 et 300.

De manière importante, le message M n'est pas transmis en clair au serveur 3. Un chiffrement est mis en oeuvre entre le dispositif client 2 et le serveur 3 à l'aide de clés de chiffrement. En outre, on propose ici de chiffrer non pas le message M, mais une donnée (appelée nonce m) dépendant à la fois du message M et d'une information de sécurité.

A l'étape 200, le dispositif client 2 calcule ainsi le nonce m à partir du message M et de l'information de sécurité.

L'information de sécurité est une information non aléatoire, facilement accessible par le dispositif client 2 et vérifiable par le serveur 3. Cette information de sécurité est recalculée à chaque nouvelle requête de signature de message. Une fonction de cette information de sécurité est de prouver au serveur 3 que la requête de signature de message émane bien du dispositif client 2, ce que le serveur 3 pourra établir après décryptage du chiffré du message.

Ainsi, l'ajout de l'information de sécurité permet de limiter encore le risque d'attaques par rejeu auprès du serveur 3, par un attaquant tiers qui usurperait l'identité d'un dispositif client enrôlé.

Selon un premier mode de réalisation, qui correspond au cas de la Figure 3, l'information de sécurité comprend une donnée d'historique représentative de précédentes transmissions de données cryptographiques entre le dispositif client 2 et le serveur 3. Ainsi, le dispositif client 2 peut prouver qu'il a participé auxdites précédentes transmissions.

Ici, la donnée d'historique comprend un compteur cpt, tenu à la fois par le dispositif client 2 et le serveur 3. Le compteur cpt est de préférence incrémenté (de 1) par le dispositif client 2 lors de chaque nouvel échange avec le serveur 3 (i.e. lors de chaque requête de signature de message). En parallèle, le serveur 3 conserve en mémoire la dernière valeur reçue du compteur, dans une variable compteur image cpt'.

Par exemple, une condition nécessaire pour valider la requête de signature est que le compteur cpt du côté du client 2 soit supérieur ou égal au compteur image cpt' du côté du serveur 3, ce qui permet d'admettre une éventuelle perte d'information de la part du serveur 3.

En alternative ou en combinaison, la donnée d'historique peut comprendre un hash d'un précédent message échangé entre le dispositif client 2 et le serveur 3, ou une chaîne de hashs de précédents messages échangés.

Selon un deuxième mode de réalisation, l'information de sécurité jointe au message M comprend une donnée de contexte d'émission du message M. Le serveur 3 peut alors vérifier, lors du décryptage du chiffré du message, que le contexte d'émission du message M est plausible. La donnée de contexte d'émission du message M peut comprendre une date d'émission et/ou une heure d'émission et/ou une donnée de localisation. De telles données peuvent être facilement calculées par le dispositif client 2, par exemple à partir des métadonnées du message M. La donnée de localisation comprend par exemple un ensemble de coordonnées GPS du dispositif client 2 lors de l'émission du message M.

Dans ce deuxième mode, le serveur 3 peut corréler les données de contexte d'émission issues du chiffré du message avec des données antérieures de contexte d'émission associées au même dispositif client 2.

Par exemple, si un groupe d'attaquants tiers sollicite frauduleusement des signatures numériques auprès du même module HSM, en se faisant passer pour le même client, à la même date et heure et/ou à des localisations très éloignées les unes des autres, alors il est facile pour le module HSM d'établir une fraude à partir des données de contexte d'émission.

Selon un troisième mode de réalisation, l'information de sécurité jointe au message M comprend une donnée de preuve d'identité du dispositif client 2. La donnée de preuve d'identité comprend, par exemple, un ou plusieurs identifiants parmi les identifiants suivants :

- identifiant IMEI, pour International Mobile Equipment Identity, et/ou
- identifiant IMSI, pour International Mobile Subscriber Identity, et/ou
- identifiant unique d'utilisateur Android, et/ou
- adresse IP, et/ou
- identifiant de protocole, etc.

Plus généralement, la donnée de preuve d'identité peut comprendre toute donnée simple associée de manière unique au dispositif client. Si un groupe d'attaquants tiers ayant récupéré frauduleusement le jeton d'authentification (B, C) et l'élément secret PIN requièrent une signature auprès du même module HSM, le module HSM est en mesure de détecter la fraude car ce jeton et ce secret ne doivent correspondre qu'à un dispositif client. On comprendra que le serveur peut avoir accès à une base de données de clients enrôlés, afin d'effectuer cette vérification.

Selon un quatrième mode, l'information de sécurité jointe au message M pourrait comprendre un challenge provenant du serveur 3 (mais pas un challenge provenant du dispositif client 2, faute de quoi on favoriserait les attaques par rejeu auprès du serveur 3).

Les modes de réalisation ci-avant définis sont éventuellement cumulatifs.

De retour à la Figure 3, le dispositif client 2 calcule à l'étape 200 le nonce m, de préférence à partir d'un haché H2(M) du message M avec H2 une fonction de hachage.

Par exemple, le nonce m est obtenu selon la formule : $m = H2(M) \| cpt$, où le signe $\|$ désigne l'opérateur concaténation. Le compteur cpt peut être remplacé par une information de sécurité selon l'une quelconque des variantes décrites ci-dessus.

Le nonce m est ensuite chiffré par le dispositif client 2 à une étape 300, et transmis au serveur 3 sous forme d'un chiffré D. Ainsi, le canal de transmission entre le dispositif client 2 et le serveur 3 est sécurisé par les clés de chiffrement. La clé de chiffrement pk3, connue du dispositif client 2, est utilisée pour le chiffrement.

Selon une variante préférentielle, la clé de chiffrement pk3 et la clé de déchiffrement sk3 correspondante sont respectivement des clés publique et privée, de sorte que le nonce m est chiffré puis déchiffré au moyen d'un algorithme de cryptographie asymétrique, typiquement RSA ou un algorithme à courbes elliptiques. Le dispositif client 2 stocke la clé publique de chiffrement pk3.

En alternative, le chiffré D peut être obtenu par tout protocole sécurisé entre le client et le serveur, et par exemple impliquer que le client et le serveur s'authentifient mutuellement, puis échangent des données sur la base d'une ou plusieurs clés de session commune(s), par exemple obtenue(s) par cryptographie symétrique ou asymétrique.

Lesdites clés de chiffrement/déchiffrement sont indépendantes des clés publiques de jeton et clés privées de jeton décrites ci-avant, en relation au procédé d'enrôlement de la Figure 2.

*- Génération de la preuve de connaissance de secret*

On décrit dans la suite un exemple de mise en oeuvre des étapes 400 et 500.

De préférence, l'authentification requise par le dispositif client est une authentification à double facteur. En complément d'une information de preuve de la connaissance de l'élément secret PIN soumis lors de l'enrôlement, le dispositif client 2 doit également prouver au serveur 3 sa possession du jeton d'authentification (B, C).

De manière avantageuse, le dispositif client 2 ne transmet pas en clair le jeton d'authentification (B, C), mais plutôt une donnée dépendant dudit jeton, pour éviter toute fuite. Dans le présent exemple, le dispositif client 2 calcule à la volée un jeton masqué (E, F) à l'étape 400, puis transmet ledit jeton masqué (E, F) au serveur 3.

Des données de masquage de jeton sont sélectionnées par le dispositif client 2 ; ici, une première donnée de masque de jeton a et une deuxième donnée de masque de jeton r sont prises dans l'ensemble Zp*, et sont connues uniquement du dispositif client 2. Les données de masquage de jeton constituent ainsi des données aléatoires non publiques. Un avantage est de renouveler le jeton masqué (E, F) lors de chaque requête de signature.

La première donnée de jeton masqué E et la deuxième donnée de jeton masqué F sont calculées à partir des données de masquage de jeton. De préférence, lesdites deux données sont obtenues à l'aide de la même fonction cryptographique SMul ayant servi précédemment à la récupération de la deuxième donnée de jeton C :

E = SMul(pk1, B, r), et F = SMul(pk2, C, a)

La fonction cryptographique SMul est ici une fonction multiplication par un scalaire.

En alternative, le jeton masqué (E, F) peut avoir été précalculé en amont de la requête de signature du message M.

La preuve de connaissance de secret s, liée à l'élément secret PIN', est ensuite générée par le dispositif client 2 à l'étape 500.

De manière très avantageuse, la preuve de connaissance de secret s est générée à partir du nonce m, et est ainsi liée au message M. Un avantage est d'omettre une étape additionnelle de partage d'une donnée aléatoire supplémentaire entre le dispositif client 2 et le serveur 3 pour l'authentification. On tire parti du nonce m qui a déjà été partagé.

De manière préférée, la preuve de connaissance de secret s dépend non seulement de l'élément secret PIN', mais aussi de la donnée dépendant du jeton d'authentification (B, C) précédemment générée, c'est-à-dire ici du jeton masqué (E, F).

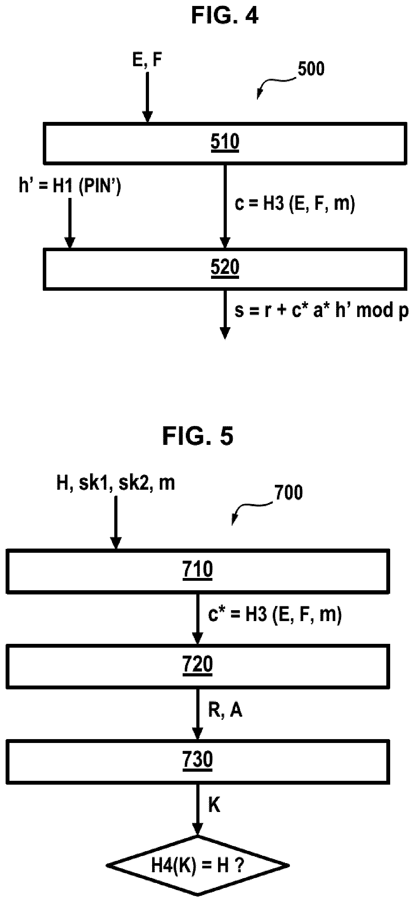

La **Figure 4** illustre un exemple de génération 500 par le dispositif client 2 de la preuve de connaissance de secret s, à partir du jeton masqué (E, F) et à partir du secret.

Dans cet exemple, le dispositif client 2 met en oeuvre des sous-étapes de :

- calcul 510 d'une donnée intermédiaire d'authentification c, en fonction du nonce m et en fonction du jeton masqué (E, F) ;
- signature 520 de la donnée intermédiaire d'authentification c, de sorte à générer la preuve de connaissance de secret s.

La donnée intermédiaire d'authentification c est calculée à partir du nonce m :
c = H3(E, F, m), avec H3 une fonction de hachage.

A partir de l'élément secret PIN', le dispositif client a obtenu la donnée intermédiaire de secret h' = H1 (PIN'). La preuve de connaissance de secret s est calculée à l'aide de la donnée intermédiaire d'authentification c, et à partir de la donnée intermédiaire de secret, de préférence selon la formule suivante :

$$s = r + c*a*h' \bmod p$$

où :

- a et r sont les données de masquage de jeton susmentionnées, et

- p est un nombre premier, de préférence le même nombre premier partagé entre le dispositif client et l'autorité de certification à l'occasion de l'enrôlement décrit ci-avant (algorithme d'El-Gamal).

Le jeton masqué (E, F) et la preuve de connaissance de secret s sont transmis au serveur 3.

Ainsi, au lieu d'utiliser un défi aléatoire transmis par le serveur 3 pour calculer la signature, le dispositif client 2 utilise la donnée intermédiaire d'authentification c. Il n'est pas nécessaire que le dispositif client 2 reçoive un défi.

Un avantage d'une telle preuve de connaissance de secret s, transmise par le dispositif client 2 au serveur 3 à la place de l'élément secret PIN' lui-même, est de protéger la confidentialité de l'élément secret PIN'. Même un attaquant qui espionnerait les échanges client/serveur, pendant le procédé de transmission de données, ne peut pas prendre connaissance de l'élément secret PIN' du client au cours de l'authentification. Ainsi, l'authentification du dispositif client 2 est possible sans compromettre la confidentialité de l'élément secret PIN', même en cas d'attaques par rejeu visant le serveur 3.

Des protocoles de signature alternatifs, ou d'autres procédés de génération de preuve de connaissance de secret dépendant de l'élément secret et du nonce issu du message à signer, pourraient être utilisés par le dispositif client en lieu et place du protocole proposé ci-avant. On pourra se référer aux différents procédés de génération de preuve de connaissance décrits dans la demande de brevet européen EP 3 010 177 A1.

*- Vérification de la preuve de connaissance de secret*

On se place désormais du côté du serveur 3. Pour rappel, le serveur 2 dispose des données issues de l'enrôlement du dispositif client 2 parmi lesquelles la première clé privée de jeton sk1, la deuxième clé privée de jeton sk2 et la donnée à mémoriser H issue de la clé utilisateur.

Le serveur 3 dispose en outre de la clé privée de déchiffrement sk3, décorrélée des clés privées de jeton, qui permet le déchiffrement du chiffré D. Le cas échéant, la clé privée de déchiffrement sk3 est retirée auprès du module matériel 4 de façon sécurisée.

A l'étape 600, le serveur 3 récupère donc la donnée déchiffrée sk3(D) égale au nonce m. Dans le présent exemple, on rappelle m = H2(M) ∥ cpt, où ∥ désigne la concaténation.

Le cas échéant, le serveur 3 peut procéder à une vérification de cohérence entre le compteur image cpt' dont il dispose (incrémenté de 1 pour tenir compte de la nouvelle requête de signature du dispositif client 2) et le compteur cpt issu du déchiffrement. Par exemple, le serveur 3 vérifie la relation d'ordre cpt >= cpt', et si cette relation n'est pas vérifiée, le serveur 3 peut refuser la requête de signature et/ou émettre une alerte.

Ensuite, pour valider l'authentification à double facteur du client, le serveur 3 met en oeuvre l'étape 700 de vérification de validité de la preuve de connaissance de secret s (qui a par exemple été obtenue selon les étapes illustrées sur la Figure 4 décrite ci-avant), ainsi que de vérification de validité de la donnée dépendant du jeton d'authentification (B, C). Cette dernière donnée correspond ici au jeton masqué (E, F).

La **Figure 5** illustre un exemple de vérification 700 par le serveur :

- A une étape 710, le serveur 3 calcule sa propre donnée intermédiaire d'authentification c* = H3(E, F, m) à l'aide du nonce déchiffré et du jeton masqué reçu.

- A une étape 720, le serveur 3 utilise la première clé privée de jeton sk1 et la deuxième clé privée de jeton sk2, pour décrypter le jeton masqué (E, F), selon la formule suivante :
R = Dec(sk1, E) et A = Dec(sk2, F), avec Dec une fonction de déchiffrement associée à la fonction de chiffrement Enc utilisée lors de l'enrôlement.

Dec est, de préférence, une fonction de déchiffrement pseudo-homomorphique.

- A une étape 730, le serveur 3 effectue la vérification.

Après avoir vérifié que la valeur A issue du décryptage de la deuxième donnée de jeton masqué F est différente de 0, à partir de la preuve de connaissance de secret s, la valeur K suivante est calculée :

$$K = [s^{\wedge}(-1) \bmod p] * (R + [c^*].A)$$

Enfin, à partir de la donnée à mémoriser H connue du serveur 3 et associée au dispositif client 2, le serveur 3 vérifie l'égalité H5(K) = H.

Si cette dernière égalité est vérifiée, alors il est considéré que l'élément secret PIN' fourni par le dispositif client est valide (PIN = PIN') et que le jeton d'authentification (B, C) est en possession du dispositif client 2 de manière licite.

De préférence, on autorise alors la signature du message M (ou de données issues de ce message, telles que le haché H2(M)) à l'aide de la clé de signature Sigk connue du module matériel 4.

*- Signature distante de message*

De retour au procédé de transmission de données de la Figure 3, en considérant que l'authentification à double facteur du dispositif client 2 a été validée, le serveur 3 (en lien avec le module matériel 4) obtient à une étape 800 le message signé M*.

Si le serveur 3 est séparé du module matériel 4 inviolable, le message signé M* est de préférence calculé au sein de l'environnement sécurisé du module matériel 4.

A titre d'exemple, le message signé M* est obtenu par un algorithme de signature numérique tel que DSA (pour « Digital Signature Algorithm »), ECDSA (pour « Elliptic Curve Digital Signature Algorithm »), Diffie-Hellman, etc. La clé de signature Sigk est alors une clé privée de signature, associée à une clé publique. A l'inverse de la clé de signature Sigk, ladite clé publique peut être partagée sans risque au destinataire 5, au dispositif client 2, etc.

Un avantage de la signature DSA est que la connaissance du message M en clair n'est pas nécessaire ; la clé de signature Sigk peut être appliquée directement au haché H2(M) issu du déchiffrement du chiffré D à l'étape 600.

Enfin, à une étape 900 optionnelle, le serveur 3 transmet la signature du message M au destinataire 5. En alternative, la signature du message M est restituée au dispositif client 2 pour stockage ou envoi, ou est stocké sur une base de données distante, etc.

## Revendications

1. Procédé de transmission de données cryptographiques entre un dispositif client (2) et un serveur (3), à partir d'un message (M) détenu par le dispositif client (2),

   le dispositif client (2) détenant un élément secret (PIN') et détenant un jeton d'authentification (B, C) préalablement généré lors d'un enrôlement auprès du serveur (3), le serveur (3) détenant des données antérieures de contexte d'émission correspondant à une communication antérieure avec le dispositif client (2),
   le procédé de transmission comprenant des étapes exécutées par le dispositif client (2) de :

   - calcul (200) d'un nonce (m), le nonce (m) étant fonction du message (M) et étant fonction d'une information de sécurité (cpt) non aléatoire connue du dispositif client (2), ladite information de sécurité comprenant au moins une donnée de contexte d'émission du message (M),
   - transmission (300) au serveur (3) d'une donnée dépendant du nonce (m) calculé,
   - transmission (400) au serveur (3) d'une donnée dépendant du jeton d'authentification (B, C),
   - génération (500) d'une preuve de connaissance de secret (s) à partir de l'élément secret (PIN') et en fonction du nonce (m), la preuve de connaissance de secret (s) étant construite de sorte à prouver la connaissance de l'élément secret (PIN') sans divulguer l'élément secret (PIN'), et transmission au serveur (3) de ladite preuve de connaissance, de sorte que le serveur (3) puisse vérifier la validité de la preuve de connaissance de secret (s), vérifier la possession du jeton d'authentification (B, C), mettre en oeuvre une corrélation de la donnée de contexte d'émission du message (M) avec les données antérieures de contexte d'émission afin d'établir éventuellement une incohérence, et décrypter le message (M).

2. Procédé selon la revendication 1, dans lequel l'information de sécurité comprend une donnée d'historique représentative de précédentes transmissions de données cryptographiques entre le dispositif client (2) et le serveur (3), de préférence :

   - un compteur (cpt) incrémenté par le dispositif client (2) lors de chaque itération de transmission de données cryptographiques au serveur (3), et/ou
   - au moins un haché d'un précédent message transmis par le dispositif client (2).

3. Procédé selon l'une quelconque des revendications 1 ou 2, dans lequel la donnée de contexte d'émission du message (M) comprend une date d'émission et/ou une heure d'émission et/ou une donnée de localisation.

4. Procédé selon l'une quelconque des revendications 1 à 3, dans lequel l'information de sécurité comprend une donnée de preuve d'identité du dispositif client (2), de préférence un identifiant du dispositif client (2).

5. Procédé selon l'une quelconque des revendications 1 à 4, dans lequel le calcul (200) du nonce (m) comprend la concaténation du message (M) et de l'information de sécurité (cpt), ou la concaténation d'un haché du message et de l'information de sécurité.

6. Procédé selon l'une quelconque des revendications 1 à 5, dans lequel le dispositif client (2) détient une clé de chiffrement de nonce (pk3) et le serveur (3) détient une clé de déchiffrement de nonce (sk3) correspondant à la clé de chiffrement de nonce (pk3),

   la donnée dépendant du nonce (m) transmise lors de la transmission (300) comprenant un chiffré (D) du nonce, le chiffré (D) étant obtenu en fonction de la clé de chiffrement de nonce (pk3),
   dans lequel, de préférence, la clé de chiffrement de nonce (pk3) est une clé publique et la clé de déchiffrement de nonce (sk3) est une clé privée, lesdites clés étant obtenues conformément à l'algorithme RSA.

7. Procédé selon l'une quelconque des revendications 1 à 6, dans lequel la génération (500) de la preuve de connaissance de secret (s) comprend des sous-étapes de :

   - calcul (510) d'une donnée intermédiaire d'authentification (c) en fonction du nonce (m) et en fonction de la donnée dépendant du jeton d'authentification,
   - signature (520) de la donnée intermédiaire d'authentification (c) pour prouver la connaissance de l'élément secret (PIN'), résultant en la preuve de connaissance de secret (s).

8. Procédé selon la revendication 7, dans lequel la preuve de connaissance de secret, notée s, est calculée par le dispositif client (2) selon la formule suivante :

$$s = r + c*a*h' \bmod p,$$

où :

> c est la donnée intermédiaire d'authentification ;
> r est un premier nombre entier aléatoire, et a est un deuxième nombre entier aléatoire ;
> p est un nombre premier ;
> h' est un haché de l'élément secret (PIN'), et/ou dans lequel la donnée dépendant du jeton d'authentification comprend un jeton masqué (E, F) dépendant d'au moins une deuxième donnée de masque aléatoire ($\alpha'$) non publique et connue uniquement du dispositif client (2).

9. Procédé selon l'une quelconque des revendications 1 à 8, le procédé comprenant des étapes additionnelles exécutées par le serveur (3) de :

> - obtention (600) du nonce (m), de sorte que le serveur (3) obtient des données de message à signer, et
> - vérification (700) de validité de la preuve de connaissance de secret (s) et de validité de la donnée dépendant du jeton d'authentification (B, C),

le serveur (3) détenant de préférence un compteur supplémentaire et l'obtention du nonce (600) comprenant de préférence une vérification par le serveur (3) qu'un compteur (cpt) obtenu à partir du nonce (m) est supérieur ou égal au compteur supplémentaire.

10. Procédé selon l'une quelconque des revendications 1 à 9, le procédé comprenant des étapes additionnelles exécutées par le serveur (3) de :

> - signature (800) du message (M), résultant en un message signé (M*),
> - transmission (900) du message signé (M*) à un dispositif destinataire (5).

11. Dispositif électronique client, le dispositif client (2) comprenant une interface de communication avec un serveur (3) informatique, le dispositif client (2) étant configuré pour mettre en oeuvre un procédé de transmission selon l'une quelconque des revendications 1 à 10, le dispositif client (2) comprenant de préférence un ordinateur et/ou un téléphone.

12. Système (1) de transmission de données cryptographiques, ledit système comprenant un dispositif client (2) selon la revendication 11, et comprenant en outre le serveur (3), le serveur (3) étant de préférence associé à un module matériel inviolable (4) disposant d'un environnement sécurisé, de manière encore plus préférentielle à une carte électronique sécurisée ou à un boîtier électronique sécurisé ou à une machine serveur sécurisée.

13. Produit programme d'ordinateur comprenant des instructions de code qui, lorsque lesdites instructions de code sont exécutées par une unité de traitement, conduisent l'unité de traitement à mettre en oeuvre un procédé de transmission de données cryptographiques selon l'une quelconque des revendications 1 à 10.

14. Moyens de stockage lisibles par une unité de traitement, les moyens de stockage comprenant des instructions de code conduisant ladite unité de traitement à mettre en oeuvre un procédé de transmission de données cryptographiques selon l'une quelconque des revendications 1 à 10.

**Patentansprüche**

1. Verfahren zur Übertragung kryptographischer Daten zwischen einer Client-Vorrichtung (2) und einem Server (3) ausgehend von einer Nachricht (M), über die die Client-Vorrichtung (2) verfügt,

> wobei die Client-Vorrichtung (2) über ein geheimes Element (PIN') verfügt und über ein Authentifizierungstoken (B, C) verfügt, das vorher bei einer Registrierung beim Server (3) erzeugt wurde, wobei der Server (3) über frühere Sendekontextdaten entsprechend einer früheren Kommunikation mit der Client-Vorrichtung (2) verfügt,
> wobei das Übertragungsverfahren Schritte enthält, die von der Client-Vorrichtung (2) ausgeführt werden:

> > - Berechnung (200) einer Nonce (m), wobei die Nonce (m) von der Nachricht (M) abhängt und von einer der Client-Vorrichtung (2) bekannten nicht zufälligen Sicherheitsinformation (cpt) abhängt, wobei die Sicherheitsinformation mindestens einen Sendekontext-Datenwert der Nachricht (M) enthält,
> > - Übertragung (300) eines von der berechneten Nonce (m) abhängigen Datenwerts an den Server (3),
> > - Übertragung (400) eines vom Authentifizierungstoken (B, C) abhängigen Datenwerts an den Server (3),
> > - Erzeugung (500) eines Geheimnis-Kenntnisnachweises (s) ausgehend von dem geheimen Element (PIN') und abhängig von der Nonce (m), wobei der Geheimnis-Kenntnisnachweis (s) so konstruiert ist, dass er die Kenntnis des geheimen Elements (PIN') nachweist, ohne das geheime Element (PIN') zu offenbaren, und Übertragung des Kenntnis-Nachweises an den Server (3), so dass der Server (3) die Gültigkeit des Geheimnis-Kenntnisnachweises (s) überprüfen, den Besitz des Authentifizierungstokens (B, C) überprüfen, eine Korrelation des Sendekontextdatenwerts der Nachricht (M) mit den früheren Sendekontextdaten durchführen, um ggf. eine Inkohärenz festzustellen, und die Nachricht (M) entschlüsseln kann.

2. Verfahren nach Anspruch 1, wobei die Sicherheitsinformation einen Verlaufsdatenwert enthält, der für vorhergehende Übertragungen kryptographischer Daten zwischen der Client-Vorrichtung (2) und dem Server (3) repräsentativ ist, vorzugsweise:

   - einen von der Client-Vorrichtung (2) bei jeder Iteration der Übertragung kryptographischer Daten an den Server (3) inkrementierten Zähler (cpt), und/oder
   - mindestens einen Hashwert einer von der Client-Vorrichtung (2) übertragenen vorhergehenden Nachricht.

3. Verfahren nach einem der Ansprüche 1 oder 2, wobei der Sendekontext-Datenwert der Nachricht (M) ein Sendedatum und/oder eine Sendezeit und/oder einen Lokalisierungs-Datenwert enthält.

4. Verfahren nach einem der Ansprüche 1 bis 3, wobei die Sicherheitsinformation einen Identitätsnachweis-Datenwert der Client-Vorrichtung (2) enthält, vorzugsweise eine Kennung der Client-Vorrichtung (2).

5. Verfahren nach einem der Ansprüche 1 bis 4, wobei die Berechnung (200) der Nonce (m) die Verkettung der Nachricht (M) und der Sicherheitsinformation (cpt) oder die Verkettung eines Hashwerts der Nachricht und der Sicherheitsinformation enthält.

6. Verfahren nach einem der Ansprüche 1 bis 5, wobei die Client-Vorrichtung (2) über einen Nonce-Verschlüsselungsschlüssel (pk3) verfügt und der Server (3) einen Nonce-Entschlüsselungsschlüssel (sk3) entsprechend dem Nonce-Verschlüsselungsschlüssel (pk3) enthält,

   wobei der von der Nonce (m) abhängige Datenwert, der bei der Übertragung (300) übertragen wird, eine Verschlüsselung (D) der Nonce enthält, wobei die Verschlüsselung (D) abhängig vom Nonce-Verschlüsselungsschlüssel (pk3) erhalten wird,

   wobei vorzugsweise der Nonce-Verschlüsselungsschlüssel (pk3) ein öffentlicher Schlüssel ist, und der Nonce-Entschlüsselungsschlüssel (sk3) ein privater Schlüssel ist, wobei die Schlüssel gemäß dem Algorithmus RSA erhalten werden.

7. Verfahren nach einem der Ansprüche 1 bis 6, wobei die Erzeugung (500) des Geheimnis-Kenntnisnachweises (s) Teilschritte enthält:

   - Berechnung (510) eines Authentifizierungs-Zwischendatenwerts (c) abhängig von der Nonce (m) und abhängig von dem vom Authentifizierungstoken abhängigen Datenwert,
   - Signatur (520) des Authentifizierungs-Zwischendatenwerts (c), um die Kenntnis des geheimen Elements (PIN') nachzuweisen, woraus der Geheimnis-Kenntnisnachweis (s) resultiert.

8. Verfahren nach Anspruch 7, wobei der Geheimnis-Kenntnisnachweis, mit s bezeichnet, von der Client-Vorrichtung (2) gemäß der folgenden Formel berechnet wird:

$$s = r + c*a*h' \bmod p,$$

   wobei:

   c der Authentifizierungs-Zwischendatenwert ist;
   r eine erste zufällige Ganzzahl ist, und a eine zweite zufällige Ganzzahl ist;
   p eine Primzahl ist;
   h' ein Hashwert des geheimen Elements (PIN') ist, und/oder wobei der vom Authentifizierungstoken abhängige Datenwert ein maskiertes Token (E, F) enthält, das von mindestens einem zweiten nicht öffentlichen und nur der Client-Vorrichtung (2) bekannten zufälligen Maskendatenwert (α') abhängt.

9. Verfahren nach einem der Ansprüche 1 bis 8, wobei das Verfahren vom Server (3) ausgeführte zusätzliche Schritte enthält:

   - Erhalt (600) der Nonce (m), so dass der Server (3) zu signierende Nachrichtendaten erhält, und
   - Überprüfung (700) der Gültigkeit des Geheimnis-Kenntnisnachweises (s) und der Gültigkeit des vom Authentifizierungstoken (B, C) abhängigen Datenwerts,

   wobei der Server (3) vorzugsweise über einen zusätzlichen Zähler verfügt, und der Erhalt der Nonce (600) vorzugsweise eine Überprüfung durch den Server (3) enthält, dass ein ausgehend von der Nonce (m) erhaltener Zähler (cpt) größer als der oder gleich dem zusätzlichen Zähler ist.

10. Verfahren nach einem der Ansprüche 1 bis 9, wobei das Verfahren vom Server (3) ausgeführte zusätzliche Schritte enthält:

- Signatur (800) der Nachricht (M), was zu einer signierten Nachricht (M*) führt,
- Übertragung (900) der signierten Nachricht (M*) an eine Zielvorrichtung (5).

11. Elektronische Client-Vorrichtung, wobei die Client-Vorrichtung (2) eine Kommunikationsschnittstelle mit einem EDV-Server (3) enthält, wobei die Client-Vorrichtung (2) konfiguriert ist, ein Übertragungsverfahren nach einem der Ansprüche 1 bis 10 durchzuführen, wobei die Client-Vorrichtung (2) vorzugsweise einen Computer und/oder ein Telefon enthält.

12. System (1) zur Übertragung kryptographischer Daten, wobei das System eine Client-Vorrichtung (2) nach Anspruch 11 enthält, und außerdem den Server (3) enthält, wobei der Server (3) vorzugsweise einem manipulationssicheren Hardwaremodul (4), das über eine gesicherte Umgebung verfügt, noch bevorzugter einer gesicherten Elektronikkarte oder einem gesicherten Elektronikgehäuse oder einer gesicherten Servermaschine zugeordnet ist.

13. Computerprogrammprodukt, das Codeanweisungen enthält, die, wenn die Codeanweisungen von einer Verarbeitungseinheit ausgeführt werden, die Verarbeitungseinheit veranlassen, ein Übertragungsverfahren kryptographischer Daten nach einem der Ansprüche 1 bis 10 durchzuführen.

14. Speichereinrichtungen, die von einer Verarbeitungseinheit lesbar sind, wobei die Speichereinrichtungen Codeanweisungen enthalten, die die Verarbeitungseinheit veranlassen, ein Übertragungsverfahren kryptographischer Daten nach einem der Ansprüche 1 bis 10 durchzuführen.

**Claims**

1. Method for transmitting cryptographic data between a client device (2) and a server (3), based on a message (M) held by the client device (2),

the client device (2) holding a secret element (PIN') and holding an authentication token (B, C) that has been generated beforehand when enrolling with the server (3), the server (3) holding previous sending context data corresponding to a previous communication with the client device (2),
the transmission method comprising steps, executed by the client device (2), of:

- computing (200) a nonce (m), the nonce (m) being a function of the message (M) and being a function of non-random security information (cpt) known to the client device (2), said security information comprising at least one sending context datum in relation to the message (M),
- transmitting (300) a datum dependent on the computed nonce (m) to the server (3),
- transmitting (400) a datum dependent on the authentication token (B, C) to the server (3),
- generating (500) a proof of knowledge of a secret (s) based on the secret element (PIN') and on the basis of the nonce (m), the proof of knowledge of a secret (s) being constructed so as to prove knowledge of the secret element (PIN') without disclosing the secret element (PIN'), and transmitting said proof of knowledge to the server (3), such that the server (3) is able to check the validity of the proof of knowledge of a secret (s), check the possession of the authentication token (B, C), correlate the sending context datum in relation to the message (M) with the previous sending context data in order to establish a potential inconsistency, and decrypt the message (M).

2. Method according to Claim 1, wherein the security information comprises a historical datum representative of previous transmissions of cryptographic data between the client device (2) and the server (3), preferably:

- a counter (cpt) that is incremented by the client device (2) upon each iteration of transmission of cryptographic data to the server (3), and/or
- at least one hash of a previous message transmitted by the client device (2).

3. Method according to either one of Claims 1 and 2, wherein the sending context datum in relation to the message (M) comprises a sending date and/or a sending time and/or a location datum.

4. Method according to any one of Claims 1 to 3, wherein the security information comprises a proof of identity datum for the client device (2), preferably an identifier of the client device (2).

5. Method according to any one of Claims 1 to 4, wherein computing (200) the nonce (m) comprises concatenating the message (M) and the security information (cpt), or concatenating a hash of the message and of the security information.

**6.** Method according to any one of Claims 1 to 5, wherein the client device (2) holds a nonce encryption key (pk3) and the server (3) holds a nonce decryption key (sk3) corresponding to the nonce encryption key (pk3), the datum dependent on the nonce (m) transmitted during the transmission (300) comprising a cipher (D) of the nonce, the cipher (D) being obtained on the basis of the nonce encryption key (pk3), wherein, preferably, the nonce encryption key (pk3) is a public key and the nonce decryption key (sk3) is a private key, said keys being obtained in accordance with the RSA algorithm.

**7.** Method according to any one of Claims 1 to 6, wherein generating (500) the proof of knowledge of a secret (s) comprises substeps of:

- computing (510) an authentication intermediate datum (c) on the basis of the nonce (m) and on the basis of the datum dependent on the authentication token,
- signing (520) the authentication intermediate datum (c) to prove knowledge of the secret element (PIN'), resulting in the proof of knowledge of a secret (s).

**8.** Method according to Claim 7, wherein the proof of knowledge of a secret, denoted s, is computed by the client device (2) using the following formula:

$$s = r + c*a*h' \bmod p,$$

where:

c is the authentication intermediate datum;
r is a first random integer, and a is a second random integer;
p is a prime number;
h' is a hash of the secret element (PIN'),
and/or wherein the datum dependent on the authentication token comprises a masked token (E, F) dependent on at least one second non-public random mask datum ($\alpha$') known only to the client device (2).

**9.** Method according to any one of Claims 1 to 8, the method comprising additional steps, executed by the server (3), of:

- obtaining (600) the nonce (m), such that the server (3) obtains message data to be signed, and
- checking (700) the validity of the proof of knowledge of a secret (s) and the validity of the datum dependent on the authentication token (B, C),

the server (3) preferably holding an additional counter, and the process of obtaining (600) the nonce preferably comprising the server (3) checking that a counter (cpt) obtained based on the nonce (m) is higher than or equal to the additional counter.

**10.** Method according to any one of Claims 1 to 9, the method comprising additional steps, executed by the server (3), of:

- signing (800) the message (M), resulting in a signed message (M*), and
- transmitting (900) the signed message (M*) to a recipient device (5).

**11.** Client electronic device, the client device (2) comprising a communication interface for communicating with a computer server (3), the client device (2) being configured to implement a transmission method according to any one of Claims 1 to 10, the client device (2) preferably comprising a computer and/or a telephone.

**12.** Cryptographic data transmission system (1), said system comprising a client device (2) according to Claim 11, and furthermore comprising the server (3), the server (3) preferably being associated with an inviolable hardware module (4) possessing a secure environment, even more preferably with a secure electronic card or with a secure electronic module or with a secure server machine.

**13.** Computer program product comprising code instructions that, when said code instructions are executed by a processing unit, cause the processing unit to implement a method for transmitting cryptographic data according to any one of Claims 1 to 10.

**14.** Storage means able to be read by a processing unit, the storage means comprising code instructions that cause said processing unit to implement a method for transmitting cryptographic data according to any one of Claims 1 to 10.

FIG. 1

FIG. 2

FIG. 3

Dispositif client 2

Serveur 3 du module matériel

$n = (H2 (M) \parallel cpt)$

M, PIN'

| 500 |
| 400 |
| 300 |
| 200 |
| 100 |

s

E, F

$D = pk3 (M)$

Destinataire 5

M*

M*

PIN = PIN'

sk3 (D)

| 900 |
| 800 |
| 700 |
| 600 |

# FIG. 4

E, F

500

| 510 |
|---|

h' = H1 (PIN')

c = H3 (E, F, m)

| 520 |
|---|

s = r + c* a* h' mod p

# FIG. 5

H, sk1, sk2, m

700

| 710 |
|---|

c* = H3 (E, F, m)

| 720 |
|---|

R, A

| 730 |
|---|

K

H4(K) = H ?

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3010177 A

- EP 3010177 A1